# EUROPÄISCHE PATENTANMELDUNG

(11) **EP 1 336 651 A1**
(43) Veröffentlichungstag der Anmeldung: **20.08.2003**
(21) Anmeldenummer: 02027811.5
(22) Anmeldetag: 12.12.2002
(51) Int. Cl.: C11D 11/00, C11D 1/83, C11D 17/06, C11D 17/00, B01J 2/18, B01J 2/02

(54) **Wasch- und reinigungsaktive Zubereitungen, enthaltend feste granuläre nichtionische Tenside**

(30) Priorität: 21.12.2001 DE 10163281
(71) Anmelder: Cognis Deutschland GmbH & Co. KG, 40589 Düsseldorf (DE)
(72) Erfinder: Schmid, Karl Heinz, Dr., 40822 Mettmann (DE); Stanislowski, Detlev, 40822 Mettmann (DE); Syldath, Andreas, Dr., 40789 Monheim (DE); Eskuchen, Rainer, Dr., 40764 Langenfeld (DE)

(57) **Zusammenfassung**

Die Erfindung betrifft wasch- und reinigungsaktive Zubereitungen, enthaltend feste granuläre nichtionische Tenside sowie deren Verwendung in wasch- und reinigungsaktiven Zubereitungen.

## Beschreibung

Die Erfindung betrifft wasch- und reinigungsaktive Zubereitungen, enthaltend feste granuläre nichtionische Tenside sowie deren Verwendung in wasch- und reinigungsaktiven Zubereitungen.

Nichtionische Tenside, beispielsweise Alkyloligoglucoside, zeichnen sich durch ausgezeichnete Detergenseigenschaften und hohe ökotoxikologische Verträglichkeit aus. Aus diesem Grund gewinnen diese Klassen nichtionischer Tenside in zunehmendem Maße an Bedeutung. Werden sie bislang in der Regel in flüssigen Formulierungen, wie beispielsweise Geschirrspülmittel oder Haarshampoos eingesetzt, so besteht ebenfalls ein großes Marktbedürfnis nach festen, wasserfreien Anbietungsformen, die sich beispielsweise auch in feste Waschmittel einarbeiten lassen.

Unter Waschmitteln sind hierbei nicht nur die Pulverwaschmittel oder Granulatwaschmittel, sondern vor allem auch die stückigen Waschmittel wie Waschmittel-Tabletten zu verstehen. Insbesondere bei letzteren hat sich gezeigt, dass durch die Verwendung von auf festen Trägern aufgezogenen nichtionischen Tensidgranulaten eine Migration und Penetration des nichtionischen Tensids in andere Bestandteile der Waschmittel-Tablette, z.B. in den sog. "Sprengmittel"-Bestandteil, vermieden werden kann, während es bei konventioneller Herstellung, bei der das nichtionische Tensid durch Aufdüsen über das gesamte Waschmittelpulver verteilt wird, bevor es zu Tabletten verpreßt wird, zu einer Penetration des nichtionischen Tensids in das "Sprengmittel" kommt, wobei dieses dann seine Wirksamkeit verliert, so dass dann der schnelle Zerfall der Tablette zu Beginn des Waschprozesses verzögert bzw. gänzlich verhindert wird.

Bei den Herstellern von Waschmitteln können die festen, wasserfreien nichtionischen Tenside nur dann Verwendung finden, wenn diese Produkte bei der Herstellung von Waschmittel- und Kosmetikprodukten einfach zu verarbeiten sind. Es ist daher unerläßlich, dass die festen, wasserfreien nichtionischen Tenside eine gute Rieselfähigkeit aufweisen, so dass sie in Silowagen bzw. "Big Bags" gehandelt werden können. Weiterhin müssen die festen, wasserfreien nichtionischen Tenside auch staubfrei sein, so dass von ihnen bei ihrer Verarbeitung keine Gefahr einer Staubexplosion ausgeht und beim Verarbeiter keine Gefahr einer gesundheitlichen Beeinträchtigung, z.B. durch Einatmen von Tensidstäuben, besteht.

Die Trocknung flüssiger Tensidzubereitungen erfolgt großtechnisch in der Regel durch konventionelle Sprühtrocknung, bei der man die wäßrige Tensidpaste am Kopf eines Sprühturmes in Form feiner Tröpfchen versprüht, denen heiße Trocknungsgase entgegen geführt werden. Aus der deutschen Patentanmeldung **DE 41 02 745 A1** (Henkel) ist z.B. ein Verfahren bekannt, bei dem man Fettalkoholsulfatpasten eine geringe Menge von 1 bis 5 Gew.-% Alkylglucosiden zusetzt und einer konventionellen Sprühtrocknung unterwirft. Allerdings lässt sich der Prozess nur in Gegenwart einer großen Menge anorganischer Salze durchführen. In der deutschen Patentanmeldung **DE 41 39 551 A1** (Henkel) wird vorgeschlagen, Pasten von Alkylsulfaten und Alkylglucosiden, die jedoch maximal 50 Gew.-% des Zuckertensids enthalten können, in Gegenwart von Mischungen aus Soda und Zeolithen zu versprühen. Hier werden jedoch nur Compounds erhalten, die eine geringe Tensidkonzentration und ein unzureichendes Schüttgewicht aufweisen. Schließlich wird in der internationalen Patentanmeldung **WO 95/14519** (Henkel) darüber berichtet, Tensidpasten einer Trocknung mit überhitztem Wasserdampf zu unterwerfen.

Problematisch wirkt sich beim Einbringen nichtionischer Tenside in wasch- und reinigungsaktive Zusammensetzungen grundsätzlich aus, dass die üblicherweise bei Raumtemperatur flüssigen Tenside innerhalb der wasch- und reinigungsaktive Zusammensetzungen migrieren und unerwünschte Wechselwirkungen mit weiteren Inhaltsstoffen, beispielsweise mit Entschäumern oder Sprengmitteln, eingehen.

Die genannten Verfahren sind jedoch technisch sehr aufwendig. Eine Aufgabe der Erfindung hat somit darin bestanden, ein einfaches Verfahren zur Herstellung von nichtionischen Tensidgranulaten zur Verfügung zu stellen, bei dem auf die Anwesenheit von organischen oder anorganischen Trägermaterialien wie Soda, Zeolithe, anorganische Salze oder polymere Träger, verzichtet werden kann. Darüber hinaus sollen durch dieses Verfahren Granulate erhältlich sein, die sich durch hohe Tensidgehalte, hohe Schüttgewichte sowie eine gute Farbqualität auszeichnen und gleichzeitig staubfrei, rieselfähig und lagerstabil sind.

Problematisch wirkt sich beim Einbringen nichtionischer Tenside in wasch- und reinigungsaktive Zusammensetzungen grundsätzlich aus, dass die üblicherweise bei Raumtemperatur flüssigen Tenside innerhalb der wasch- und reinigungsaktive Zusammensetzungen migrieren und unerwünschte Wechselwirkungen mit weiteren Inhaltsstoffen, beispielsweise mit Entschäumern oder Sprengmitteln, eingehen.

Aus dem Stand der Technik sind darüber hinaus Versuche bekannt, die Migration von nichtionischen Tensiden in Waschmitteln durch Immobilisierung der flüssigen nichtionischen Tenside auf Trägersubstanzen zu verhindern. Nachteilig wirkt sich bei diesen Verfahren aus, dass die Immobilisierung auf Trägern ein in der Regel aufwändiges Verfahren darstellt.

Weiterhin wirkt sich bei den aus dem Stand der Technik bekannten Tenside oft nachteilig aus, daß die Herstellung von stückigen Waschmitteln, insbesondere von Waschmitteltabletten, oft eine hohe Preßkraft erfordert.

Der vorliegenden Erfindung lag daher die Aufgabe zugrunde, wasch- und reinigungsaktive Zubereitungen zur Verfügung zu stellen, welche die aus dem Stand der Technik bekannten Nachteile nicht oder zumindest nur in verringertem Maße aufweisen.

Gegenstand der Erfindung sind daher Wasch- und reinigungsaktive Zubereitungen, mindestens enthaltend ein Granulat eines bei Raumtemperatur festen nichtionischen Tensids und mindestens ein anionisches Tensid.

Unter einem "bei Raumtemperatur festen" nichtionischen Tensid wird im Rahmen des vorliegenden Textes ein Tensid verstanden, dass einen Erweichungspunkt oder einen Schmelzpunkt von mehr als etwa 35 °C, vorzugsweise von mehr als 40 oder mehr als 45 °C aufweist.

Als nichtionische Tenside eignen sich im Rahmen der vorliegenden Erfindung beispielsweise Alkylund Alkenyloligoglykoside, Fettsäure-N-alkylpolyhydroxyalkylamide, Alkoholalkoxylate, alkoxylierte Carbonsäureester, vorzugsweise Alkyl- und Alkenyloligoglykoside.

Alkyl- und/oder Alkenyloligoglykoside stellen bekannte nichtionische Tenside dar, die der Formel (I) folgen,

RO(G)z (I)

in der R für einen Alkyl- und/oder Alkenylrest mit 4 bis 22 Kohlenstoffatomen, G für einen Zuckerrest mit 5 oder 6 Kohlenstoffatomen und z für Zahlen von 1 bis 10 steht. Sie können nach den einschlägigen Verfahren der präparativen organischen Chemie erhalten werden. Steilvertretend für das umfangreiche Schrifttum sei hier auf die Übersichtsarbeit von Biermann et al. in **Starch/Stärke 45,281 (1993),** B.Salka in **Cosm.Toil. 108, 89 (1993)** sowie J.Kahre et al. in **SÖFW-Journal Heft 8, 598 (1995)** verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Die Indexzahl z in der allgemeinen Formel (I) gibt den Oligomerisierungsgrad (DP), d. h. die Verteilung von Mono- und Oligoglykosiden an und steht für eine Zahl zwischen 1 und 10. Während p in einer gegebenen Verbindung stets ganzzahlig sein muß und hier vor allem die Werte z = 1 bis 6 annehmen kann, ist der Wert p für ein bestimmtes Alkyloligoglykosid eine analytisch ermittelte rechnerische Größe, die meistens eine gebrochene Zahl darstellt.

Vorzugsweise werden Alkyl- und/oder Alkenyloligoglykoside mit einem mittleren Oligomerisierungsgrad z von 1,1 bis 4,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,6 liegt. Der Alkyl- bzw. Alkenylrest R kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestem oder im Verlauf der Hydrierung von Aldehyden aus der Roelen'schen Oxosynthese erhalten werden. Bevorzugt sind Alkyloligoglucoside der Kettenlänge C₈-C₁₀ (DP = 1 bis 3), die als Vorlauf bei der destillativen Auftrennung von technischem C₈-C₁₂-Kokosfettalkohol anfallen sowie Alkyloligoglucoside auf Basis technischer C9/11-, C12/13- und C12/15-Oxoalkohole (DP = 1 bis 3).

Besonders bevorzugt sind hierbei die technischen Oxoalkohole der Firma Shell, welche unter dem Namen Dobanol® bzw. Neodol® vermarktet werden. Der Alkyl- bzw. Alkenylrest R kann sich ferner auch von primären Alkoholen mit 12 bis 22, vorzugsweise 12 bis 18 Kohlenstoffatomen ableiten. Typische Beispiele sind Laurylalkohol, Myristylalkohol, Cetylalkohol, Palmoleylalkohol, Stearylaikohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können. Bevorzugt sind Alkyloligoglucoside auf Basis von gehärtetem C_{12/14}-Kokos- oder Palmkernalkohol bzw. C_{12/14}-Fettalkohol aus Kokos- Palmkern- oder Palmöl mit einem DP von 1 bis 3.

Eine weitere Klasse geeigneter nichtionischer Tenside, die im Rahmen der vorliegenden Erfindung entweder als alleiniges nichtionisches Tensid oder in Kombination mit anderen nicht-ionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP **58/217598** beschrieben sind oder die vorzugsweise nach dem in der internationalen Patentanmeldung **WO 90/13533** beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein.

Ebenfalls geeignete nichtionische Tenside sind Polyhydroxyfettsäureamide der Formel (II), 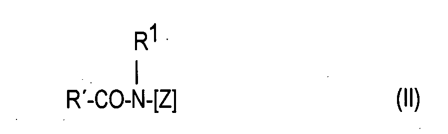 in der R'CO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (III), 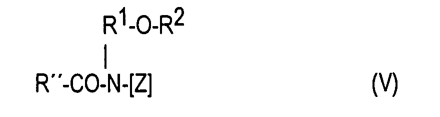 in der R" für einen linearen oder verzweigten Alkyl- oder Alkenylrest mit 7 bis 12 Kohlenstoffatomen, R² für einen linearen, verzweigten oder cyclischen Alkylrest oder einen Arylrest mit 2 bis 8 Kohlenstoffatomen und R³ für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise nach der Lehre der internationalen Anmeldung WO-A-95/07331 durch Umsetzung mit Fettsäuremethylestern in Gegenwart eines Alkoxids als Katalysator in die gewünschten Polyhydroxyfettsäureamide überführt werden.

Bei den Polyhydroxyfettsäureamiden handelt es sich um bekannte Stoffe, die üblicherweise durch reduktive Aminierung eines reduzierenden Zuckers mit einem Alkylamin oder einem Alkanolamin und nachfolgender Acylierung mit einer Fettsäure, einem Fettsäurealkylester oder einem Fettsäurechlorid erhalten werden können. Hinsichtlich der Verfahren zu ihrer Herstellung sei auf die US-Patentschriften **US 1,985,424, US 2,016,962** und **US 2,703,798** sowie die internationale Patentanmeldung **WO 92/06984** verwiesen. Eine Übersicht zu diesem Thema von H. Kelkenberg findet sich in **Tens.Surf.Deterg. 25, 8 (1988).**

Auch die Verwendung der Fettsäure-N-alkylpolyhydroxyalkylamide ist Gegenstand einer Vielzahl von Veröffentlichungen. Aus der europäischen Patentanmeldung **EP 0 285 768 A1** (Hüls) ist beispielsweise ihr Einsatz als Verdickungsmittel bekannt. In der Französischen Offenlegungsschrift **FR 1580491 A** (Henkel) werden wäßrige Detergensgemische auf Basis von Sulfaten und/oder Sutfonaten, Niotensiden und gegebenenfalls Seifen beschrieben, die Fettsäure-N-alkylglucamide als Schaumregulatoren enthalten. Mischungen von kurz- und längerkettigen Glucamiden werden in der Deutschen Patentschrift **DE 44 00 632 C1** (Henkel) beschrieben. In den Deutschen Offenlegungsschriften **DE 43 26 959 A1** und **DE 43 09 567 A1** (Henkel) wird ferner über den Einsatz von Glucamiden mit längeren Alkylresten als Pseudoceramide in Hautpflegemitteln sowie über Kombinationen von Glucamiden mit Proteinhydrolysaten und kationischen Tensiden in Haarpflegeprodukten berichtet. Gegenstand der internationalen Patentanmeldungen **WO 92/06153, WO 92/06156, WO 92/06157, WO 92/06158, WO 92/06159** und **WO 92/06160** (Procter & Gamble) sind Mischungen von Fettsäure-N-alkylglucamiden mit anionischen Tensiden, Tensiden mit Sulfat- und/oder Sulfonatstruktur, Ethercarbonsäuren, Ethersulfaten, Methylestersulfonaten und nichtionischen Tensiden. Die Verwendung dieser Stoffe in den unterschiedlichsten Wasch-, Spül- und Reinigungsmitteln wird in den internationalen Patentanmeldungen **WO 92/06152, WO 92/06154 WO 92/06155, WO 92/06161, WO 92/06162, WO 92/06164, WO 92/06170, WO92/06171 und WO 92/06172** (Procter & Gamble) beschrieben.

Ebenfalls als nichtionische Tenside einsetzbar sind Alkoholethoxylate. Diese werden herstellungsbedingt als Fettalkohol- oder Oxoalkoholethoxylate bezeichnet und folgen vorzugsweise der Formel (IV),

**R'"-O(CH**_{**2**}**CH**_{**2**}**O)**_{**n**}**H** (IV),

in der R"' für einen linearen oder verzweigten Alkyl- und/oder Alkenylrest mit 6 bis 22 Kohlenstoffatomen und n für Zahlen von 1 bis 50 steht. Typische Beispiele sind die Addukte von durchschnittlich 1 bis 50, vorzugsweise 5 bis 40 und insbesondere 10 bis 25 Mol an Capronalkohol, Caprylalkohol, 2-Ethyl-hexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen. Bevorzugt sind Addukte von 10 bis 40 Mol Ethylenoxid an technische Fettalkohole mit 12 bis 18 Kohlenstoffatomen, wie beispielsweise Kokos-, Palm-, Palmkern- oder Talgfettalkohol.

Ebenfalls als nichtionische Tenside einsetzbar sind alkoxylierte Carbonsäureester. Derartige Verbindungen sind aus dem Stand der Technik bekannt. So sind beispielsweise solche alkoxylierte Carbonsäureester durch Veresterung von alkoxylierten Carbonsäuren mit Alkoholen zugänglich. Bevorzugt im Sinne der vorliegenden Erfindung werden die Verbindungen jedoch durch Umsetzung von Carbonsäureestern mit Alkylenoxiden unter Verwendung von Katalysatoren hergestellt, insbesondere unter Verwendung von calciniertem Hydrotalcit gemäß der Deutschen Offenlegungsschrift **DE 39 141 31** A, die Verbindungen mit einer eingeschränkten Homologenverteilung liefern. Nach diesem Verfahren können sowohl Carbonsäureester von einwertigen Alkoholen als auch von mehrwertigen Alkoholen alkoxyliert werden. Bevorzugt gemäß der vorliegenden Erfindung werden alkoxylierte Carbonsäureester von einwertigen Alkoholen, die der allgemeinen Formel (V) folgen,

**R**^{**4**}**CO(OAlk)**_{**n**}**OR**^{**5**} (V)

in der R⁴CO für einen aliphatischen Acylrest, abgeleitet von einer Carbonsäure, OAlk für Alkylenoxid und R⁵ für einen aliphatischen Alkylrest, abgeleitet von einem einwertigen aliphatischen Alkohol, steht. Insbesondere geeignet sind alkoxylierte Carbonsäureester der Formel (V), in der R⁴CO für einen aliphatischen Acylrest mit 6 bis 30, vorzugsweise 6 bis 22 und insbesondere 10 bis 18 Kohlenstoffatomen, OAlk für einen CH₂CH₂O-, CHCH₂CH₂O- und/oder CHₙ-CHCH₂O-Rest, n durchschnittlich für Zahlen von 1 bis 30, vorzugsweise 5 bis 20 und insbesondere 10 bis 15 und R⁵ für einen aliphatischen Alkylrest mit 1 bis 4 und vorzugsweise 1 und/oder 2 Kohlenstoffatomen steht. Bevorzugte Acylreste leiten sich von Carbonsäuren mit 6 bis 22 Kohlenstoffatomen natürlicher oder synthetischer Herkunft ab, insbesondere von linearen, gesättigten und/oder ungesättigten Fettsäuren einschließlich technischer Gemische derselben, wie sie durch Fettspaltung aus tierischen und/oder pflanzlichen Fetten und Ölen zugänglich sind, zum Beispiel aus Kokosöl, Palmkernöl, Palmöl, Sojaöl, Sonnenblumenöl, Rüböl, Baumwollsaatöl, Fischöl, Rindertalg und Schweineschmalz. Beispiele für derartige Carbonsäuren sind Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und/oder Erucasäure. Bevorzugte Alkylreste leiten sich von primären, aliphatischen monofunktionellen Alkoholen mit 1 bis 4 Kohlenstoffatomen ab, die gesättigt und/oder ungesättigt sein können. Beispiele für geeignete Monoalkohole sind Methanol, Ethanol, Propanol, sowie Butanol, insbesondere Methanol.

OAlk steht für die Alkylenoxide, die mit den Carbonsäureestern umgesetzt werden und umfassen Ethylenoxid, Propylenoxid und/oder Butylenoxid, vorzugsweise Ethylenoxid und/oder Propylenoxid, insbesondere Ethylenoxid alleine. Insbesondere geeignet sind alkoxylierte Carbonsäureester der Formel (V), in der OAlk für einen CH₂CH₂O-Rest, n durchschnittlich für Zahlen von 10 bis 15 und R⁵ für einen Methylrest steht. Beispiele für derartige Verbindungen sind mit im Durchschnitt 5, 7, 9 oder 11 Mol Ethylenoxid alkoxylierte Laurinsäuremethylester, Kokosfettsäuremethylester und Talgfettsäuremethylester. Die nichtionischen Tenside können in Mengen von 20 bis 95, vorzugsweise 50 bis 80 und insbesondere 60 bis 70 - bezogen aus die Endkonzentration - eingesetzt werden.

### Hydroxymischether

Die ebenfalls als nichtionische Tenside geeigneten Hydroxymischether (HME) stellen bekannte nichtionische Tenside mit unsymmetrischer Etherstruktur und Polyalkylenglykolanteilen dar, welche man beispielsweise erhält, indem man Olefinepoxide mit Fettalkoholpolyglykolethern einer Ringöffnungsreaktion unterwirft. Entsprechende Produkte und deren Einsatz im Bereich der Reinigung harter Oberflächen sind beispielsweise Gegenstand der europäischen Patentschrift EP 0693049 B 1 sowie der internationalen Patentanmeldung **WO 94/22800** (Oliv) sowie der dort genannten Schriften. Typischerweise folgen die Hydroxymischether der allgemeinen Formel (VI),

**R**^{**6**}**-CH(OH)-CHR**^{**7**}**O(CH**_{**2**}**CHR**^{**8**}**O)**_{**n**}**R**^{**9**}

in der R⁶ für einen linearen oder verzweigten Alkylrest mit 2 bis 18, vorzugsweise 10 bis 16 Kohlenstoffatomen, R⁷ für Wasserstoff oder einen linearen oder verzweigten Alkylrest mit 2 bis 18 Kohlenstoffatomen, R⁸ für Wasserstoff oder Methyl, R9 für einen linearen oder verzweigten, Alkyl- und/oder Alkenylrest mit 6 bis 22, vorzugsweise 12 bis 18 Kohlenstoffatomen und n für Zahlen von 1 bis 50, vorzugsweise 2 bis 25 und insbesondere 5 bis 15 steht, mit der Maßgabe, daß die Summe der Kohlenstoffatome in den Resten R⁶ und R⁷ mindestens 4 und vorzugsweise 12 bis 18 beträgt. Wie aus der Formel hervorgeht, können die HME Ringöffnungsprodukte sowohl von innenständigen Olefinen (R⁷ ungleich Wasserstoff) oder endständigen Olefinen (R⁶ gleich Wasserstoff) sein, wobei letztere im Hinblick auf die leichtere Herstellung und die vorteilhafteren anwendungstechnischen Eigenschaften bevorzugt sind. Gleichfalls kann der polare Teil des Moleküls eine Polyethylenglykol- oder eine Polypropylenglykolkette sein; ebenfalls geeignet sind gemischte Ketten von PE und PP-Einheiten, sei es in statistischer oder Blockverteilung. Typische Beispiele sind Ringöffnungsprodukte von 1,2-Hexenepoxid, 2,3-Hexenepoxid, 1,2-Octenepoxid, 2,3-Ocetenepoxid, 3,4-Octenepoxid, 1,2-Decenepoxid, 2,3-Decenepoxid, 3,4-Decenepoxid, 4,5-Decenepoxid, 1,2-Dodecenepoxid, 2,3-Dodecenepoxid, 3,4-Dodecenepoxid, 4,5-Dodecenepoxid, 5,6-Dodecenepoxid, 1,2-Tetradecenepoxid, 2,3-Tetradecenepoxid, 3,4-Tetradecenepoxid, 4,5-Tetradecenepoxid, 5,6-Tetradecenepoxid, 6,7-Tetradecenepoxid, 1,2-Hexadecenepoxid, 2,3-Hexadecenepoxid, 3,4-Hexadecenepoxid,4,5-Hexadecenepoxid,5,6-Hexadecenepoxid,6,7-Hexadecenepoxid,7,8-Hexadecenepoxid,1,2-Octadecenepoxid, 2,3-Octadecenepoxid, 3,4-Octadecenepoxid, 4,5-Octadecenepoxid, 5,6-Octadecenepoxid, 6,7-Octadecenepoxid, 7,8-Octadecenepoxid und 8,9-Octadecenepoxid sowie deren Gemische mit Anlagerungsprodukten von durchschnittlich 1 bis 50, vorzugsweise 2 bis 25 und insbesondere 5 bis 15 Mol Ethylenoxid und/oder 1 bis 10, vorzugsweise 2 bis 8 und insbesondere 3 bis 5 Mol Propylenoxid an gesättigte und/oder ungesättigte primäre Alkohole mit 6 bis 22, vorzugsweise 12 bis 18 Kohlenstoffatomen, wie z. B. Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen. Üblicherweise sind die HME in den Formkörpern in Mengen von 0,1 bis 20, vorzugsweise 0,5 bis 8 und insbesondere 3 bis 5 Gew.-% enthalten.

Die erfindungsgemäß eingesetzten nichtionischen Tensidgranulate können im Rahmen der vorliegenden Erfindung ein nichtionisches Tensid oder ein Gemisch aus zwei oder mehr nichtionischen Tensiden enthalten. Wenn die nichtionischen Tensidgranulate ausschließlich nichtionische Tenside enthalten, so ist es im Rahmen der vorliegenden Erfindung erforderlich, dass das Gemisch der nichtionischen Tenside insgesamt einen Schmelzpunkt aufweist, der im Rahmen des oben genannten Bereichs liegt. Dabei ist es beispielsweise möglich, dass ein erfindungsgemäß eingesetzte Tensidgranulate beispielsweise ein nichtionisches Tensid oder ein Gemisch aus zwei oder mehr nichtionischen Tenside enthält, deren Schmelzpunkt außerhalb des obengenannten Bereichs liegt. In einem solchen Fall muss jedoch noch mindestens ein weiteres nichtionisches Tensid im Granulate vorliegen, dass den Schmelzpunkt auf einen Wert innerhalb des oben angegebenen Bereichs erhöht.

Es ist im Rahmen der vorliegenden Erfindung jedoch ebenfalls möglich, Granulate nichtionischer Tenside einzusetzen, die ein polymeres Verfestigungsmittel enthalten. Dies kann beispielsweise dann erforderlich oder vorteilhaft sein, werden das nichtionische Tensid oder das Gemisch aus zwei oder mehr nichtionischen Tensiden einen Erweichungspunkt oder einen Schmelzpunkt aufweist, der zwar innerhalb des oben angegebenen Bereichs liegt, jedoch erhöht werden soll.

### Polymere Verfestigungsmittel

Die im Rahmen der erfindungsgemäßen Zubereitungen einsetzbaren Granulate nichtionischer Tenside können als polymere Verfestigungsmittel beispielsweise organische polymere Verbindungen enthalten..

Als organische polymere Verbindungen kommen kationische, anionische, zwitterionische, amphotere und/oder nichtionische organische Polymere in Frage. In einer bevorzugten Ausführungsform der Erfindung können als organische Polymere Poly(meth)acrylaten, Polypeptiden, Polysacchariden, Cellulosen, Polyvinylalkoholen, Polyvinylpyrrolidon, Polykondensaten, Polyhydroxycarbonsäuren, Polyethylenglykol, Polyestern, Polyurethanen und/oder deren Derivate eingesetzt werden. Geeignete organische kationische Polymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte VinylpyrrolidonNinylimidazol-Polymere, wie z.B. Luviquat® (BASF), Kondensationsprodukte von Polyglykolen und Aminen, quatemierte Kollagenpolypeptide, wie beispielsweise Lauryldimonium Hydroxypropyl Hydrolyzed Collagen (Lamequat®L/Gränau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide, wie z.B. beschrieben in der **FR 2252840 A** sowie deren vernetzte wasserlöslichen Polymere, kationische Chitinderivate wie quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino1,3-propan, kationischer Guar-Gum, wie z.B. Jaguar® CBS, Jaguar® C-17, Jaguar® C-16 der Firma Celanese, quatemierte Ammoniumsalz-Polymere, wie z.B. Mirapol® A-15, Mirapol® AD-1, Mirapol® AZ-1 der Firma Miranol.

Als organische anionische, zwitterionische, amphotere und nichtionische polymere Verbindungen kommen beispielsweise Vinylacetat/Crotonsäure-Copolymere, Vinylpyrrolidon/Vinylacrylat-Copolymere, Vinylacetat/Butylmaleat/Isobornylacrylat-Copolymere, Methylvinylether/Maleinsäureanhydrid-Copolymere und deren Ester, Acrylamidopropyltrimethylammoniumchlorid/ Acrylat-Copolymere, Octylacrylamid/Methylmethacrylat/tert.-Butylaminoethylmethacrylat/2-Hydroxyproylmethacrylat-Copolymere, Polyvinylpyrrolidon, VinylpyrrolidonNinylacetat-Copolymere, Vinylpyrrolidon/Dimethylaminoethylmethacrylat/Vinylcaprolactam-Terpolymere sowie gegebenenfalls derivatisierte Celluloseether in Frage. In einer bevorzugten Ausführungsform der Erfindung kommen als organische polymere Verbindungen Poly(meth)arylate, Polypeptide, Polysaccharide, Cellulose, Polyvinylalkohole, Polyvinylpyrrolidone Polykondensate, Polyhydroxycarbonsäuren und/oder deren Derivate in Frage.

### (1) Poly(meth)arylate

Als Poly(meth)acrylate kommen polymere Verbindungen in Frage, die aus Acrylsäure bzw. Methacrytsäure sowie deren aus dem Stand der Technik bekannten Derivaten gebildet werden können. Vorzugsweise werden Polyacrylat/methacylat (z.B. Sokalan® CP 5: BASF).und Polyacrylate wie beispielsweise Carbopol ® und Pernulen-Typen von Goodrich; Synthalene® von Sigma; Keltrol-Typen von Keico; Sepigel-Typen von Seppic; Salcare-Typen von Allied Colloids) eingesetzt.

### (2) Proteine

Als Proteine kommen im Sinne der Erfindung Polypeptide auf Basis von tierischem Protein (z.B. Kollagen) oder auf Basis von pflanzlichem Protein mit einem Molekulargewicht von 1.000 bis 300.000, vorzugsweise 5.000 bis 200.000 und insbesondere 10.000 bis 150.000 in Frage. In einer besonderen Ausführungsform werden wasserlösliche Proteine eingesetzt, z.B. auf Basis von Weizenprotein. In diesem Fall ist ein Molekulargewicht von 5.000 bis 50.000 besonders bevorzugt. Entsprechende Proteine auf Basis Molke, Soja, Reis und Seide können ebenfalls Verwendung finden. Besonders bevorzugt werden Proteinhydrolysate mit einem mittleren Molekulargewicht von 500 bis 30.000 (z.B. Gluadin® WP, von Cognis GmbH) eingesetzt. In einer bevorzugten Ausführungsform der Erfindung können ebenfalls anionisch oder kationisch modifizierte Proteinhydrolysate (z.B. Gluadin WQ; Cognis GmbH) eingesetzt werden. Polypeptide können auch auf bekanntem Wege aus Aminosäuren sowie deren Derivate, d.h. aus Carbonsäuren mit einer oder mehreren Amino-Gruppen im Molekül, gebildet werden. Im Sinne der Erfindung können die Proteine bzw. Polypeptide durch Verknüpfung der einzelnen Aminosäuren sowie deren beliebige Kombination untereinander hergestellt werden, hierbei kommen beispielsweise als Aminosäuren Glycin, Alanin, Serin, Cystein, Phenylalanin, Tyrosin, Tryptophan, Threonin, Methionin, Valin, Prolin, Leucin, Isoleucin, Lysin, Arginin, Histidin, L-Asparaginsäure, Asparagin, Glutaminsäure, Glutamin sowie deren Derivate (beispielsweise Polyethylenglutamat) in Frage, die nach der Derivatisierung mindestens eine COOHund mindestens eine Amino-Gruppe enthalten, Vorzugsweise kommen Polyasparaginat (beispielsweise mit MG 20.000 (Firma Donlar) bzw. mit MG 2.000 - 3.000 (Firma Bayer) in Frage.

### (3) Polysaccaride und/oder deren Derivate

Als Polysaccharide kommen alle aus dem Stand der Technik bekannten Zuckerarten, Stärke, abgebaute Stärke (z.B. Flüssig-Sirup), Glykogen, Cellulose sowie deren Derivate in Frage. Vorzugsweise werden als Polysaccharide Stärke, Cellulose sowie deren Derivate und insbesondere Xanthan-Gum, Guar-Guar (z. B. Guarhydroxypropyl-trimethylammoniumchlorid; Cosmedia Guar C 261; Cognis GmbH: Guarmehl; Cosmedia Guar U, Cognis GmbH), Agar-Agar, Alginate und Tylosen, Carboxymethylcellulose und Hydroxyethylcellulose, Dextrin, Cyclodextrin, Carboxymethyldextran sowie deren Derivate eingesetzt.

### (4) Polyvinylalkohole

Polyvinylalkohole haben im Sinne der Erfindung die allgemeine Struktur -CH₂CHOH-CH₂-CH₂0H- die in geringen Anteilen (ca. 2%) auch Struktureinheiten des Typs -CH₂CHOH-CHOH-CH₂OH- enthalten können. Polyvinylakohole können nicht direkt durch Polymerisation von Vinylalkohol (H₂C=CH-OH) erhalten werden, da dessen Konzentration im Tautomeren-Gleichgewicht (Keto-Enol-Tautomerie) mit Acetaldehyd (H₂C-CHO) zu gering ist. Polyvinylakohole werden daher v. a. aus Polyvinylacetaten über polymeranaloge Reaktionen wie Hydrolyse, technisch insbesondere aber durch alkalisch katalysierte Umesterung mit Alkoholen (vorzugsweise Methanol) in Lösung hergestellt. Im Rahmen der Erfindung werden vorzugsweise Polyvinylakoholeeingesetzt, die als weiß-gelbliche Pulver oder Granulate mit Polymerisationsgraden im Bereich von vorzugsweise 500 bis 2500 (Moimassen von ca. 20 000-100 000 g/mol) angeboten werden. Derartige Produkte haben Hydrolysegrade von 98 bis 99 bzw. 87 bis 89 Mol-%, enthalten also noch einen Restgehalt an Acetyl-Gruppen. Geeignete Produkte haben vorzugsweise ein Molekulargewicht von 5.000 bis 50.000 und insbesondere 10.000 bis 30.000.

### (5) Polyvinylpyrrolidone

Polyvinylpyrrolidone [Poly(1-vinyl-2-pyrrolidinone)] werden hergestellt durch radikalische Polymerisation von 1-Vinylpyrrolidon nach Verfahren der Substanz-, Lösungs- od. Suspensionspolymerisation unter Einsatz von Radikalbildnern (Peroxide, Azo-Verbindungen) als Initiatoren und meist in Gegenwart aliphatischer Amine, welche die im sauren Medium erfolgende Zersetzung des Monomers unterbinden. Die ionische Polymerisation des Monomeren liefert nur Produkte mit niedrigen Molmassen. Vorzugsweise werden Polyvinylpyrrolidone mit Molmassen im Bereich von 2.500 bis 75.000, besonders bevorzugt 5.000 bis 60,000 und insbesondere im Bereich von 20.000 bis 50.000 g/mol in Frage.

### (6) Polyhydroxycarbonsäuren

Als Polyhydroxycarbonsäuren können auch Copolymere aus Vinylalkohol und (Meth)acrylsäuren verwendet werden. Eine besondere Ausführungsform sind Polyhydroxycarbonsäuren, welche durch Polykondensation von Polyhydroxysäuren wie Weinsäure, Citronensäure, Apfelsäure sowie aus deren Mischungen hergestellt werden. Die organischen polymeren Trägermaterialien können in Mengen von 0,1 bis 50, vorzugsweise 1 bis 30 und insbesondere 5 bis 20- bezogen auf die Endkonzentration - eingesetzt werden.

Die im Rahmen einer erfindungsgemäßen Zubereitungen eingesetzten Granulate nichtionischer Tenside können grundsätzlich auf beliebige Weise hergestellt werden Im Rahmen einer bevorzugten Ausführungsform der vorliegenden Erfindung hat sich jedoch gezeigt, dass sich besonders gut geeignete Granulate durch ein "Vertropfung" genanntes Verfahren erhalten lassen.

Bei diesem Verfahren wird die Schmelze eines bei Raumtemperatur festen nichtionischen Tensids oder ein Gemisch aus zwei oder mehreren solchen Tensiden oder ein Gemisch aus einem oder mehreren nichtionischen Tensiden und einem oder mehreren polymeren Verfestigungsmitteln mit Hilfe einer mit Löchem versehenen, vibrierenden Platte zu Tropfen geformt. Die Platte vibriert dabei in Richtung der Plattennormalen, wobei in Abhängigkeit von der Viskosität der Schmelze und der Vibrationsfrequenz besonders regelmäßig geformte Tropfen mit einer engen Größenverteilung erhalten werden können.

Besonders zur Durchführung dieses Verfahrens geeignet ist beispielsweise die Anlage Mini-Droppoline der Firma Rieter Automatik GmbH in Grossostheim (Deutschland). Vorzugsweise wird dabei mit einer Vibrationsfrequenz von etwa 100 - 500 Hz, beispielsweise etwa 250 bis etwa 400 Hz, einem Düsendurchmesser von etwa 200 bis 600 µm, insbesondere einem Düsendurchmesser von etwa 250 bis etwa 400 µm, einem Druck (je nach Viskosität der Schmelze des Niotensids) von etwa 0,4 bis etwa 5 bar, und einer in einem Intervall von etwa -10 bis etwa +10 °C um den Schmelzpunkt des Niotensids liegenden Düsentemperatur.

Gegenstand der vorliegenden Erfindung ist daher auch ein Verfahren zur Herstellung von Granulaten fester nichtionischer Tenside, bei dem eine Schmelze, mindestens enthaltend ein bei Raumtemperatur festes nichtionisches Tensid über eine mit mindestens einem Loch versehene, in Richtung der Plattennormalen vibrierende Platte so ausgetragen wird, dass sich Tropfen einer Größe von 100 bis 1200 µm bilden.

Im Rahmen einer weitere bevorzugten Ausführungsform der vorliegenden Erfindung werden die Tropfen vor dem Auftreffen auf eine Auffangvorrichtung gekühlt.

Neben einem Granulat eines bei Raumtemperatur festen, nichtionischen Tensids enthält eine erfindungsgemäße wasch- und reinigungsaktive Zubereitung noch mindestens ein anionisches Tensid.

### Anionische-Tenside

Typische Beispiele für im Rahmen der erfindungsgemäßen Zubereitungen geeignete anionische Tenside sind Seifen, Alkylbenzolsulfonate, sekundäre Alkansulfonate, Olefinsulfonate, Alkylethersulfonate, Glycerinethersulfonate, α-Methylestersulfonate, Sulfofettsäuren, Alkyl- und/oder Alkenylsulfate, Alkylethersulfate, Glycerinethersulfate, Hydroxymischethersulfate, Fettalkohol(ether)-phosphate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

Bevorzugt sind anionische Tenside ausgewählt aus der Gruppe, die gebildet wird von Alkylund/oder Alkenylsulfate, Alkylethersulfate, Alkylbenzolsulfonate, Seifen, Monoglycerid(ether)sulfate und Alkansulfonate, insbesondere Fettalkoholsulfate, Fettalkoholethersulfate, sekundäre Alkansulfonate und lineare Alkylbenzolsulfonate.

Vorzugsweise enthalten die erfindungsgemäßen Wasch- und Reinigungsmittel 0,1 bis 89 Gew.-%, vorzugsweise 0,2 bis 85 Gew.-%, insbesondere 0,5 bis 70 Gew.-% anionische Tenside, berechnet als Aktivsubstanz, bezogen auf die Mittel.

Unter Alkyl- und/oder Alkenylsulfaten, die auch häufig als Fettalkoholsulfate bezeichnet werden, sind die Sulfatierungsprodukte primärer Alkohole zu verstehen, die der Formel (VII) folgen,

**R**^{**10**}**O-SO**_{**3**}**X** (VII)

in der R¹⁰ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht.

Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelen'schen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

### Alkylethersulfate

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Im Sinne der Erfindung kommen Ethersulfate in Betracht, die der Formel (VIII) folgen,

**R**^{**11**}**O-(CH**_{**2**}**CH**_{**2**}**O)**_{**a**}**SO**_{**3**}**X** (VIII)

in der R¹¹ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}-Kokosfettalkoholfraktionen in Form ihrer Natrium und/oder Magnesiumsalze.

### Alkylbenzolsulfonate

Alkylbenzolsulfonate folgen vorzugsweise der Formel (IX),

**R**^{**12**}**-Ph-SO**_{**3**}**X** (IX)

in der R¹² für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

### Seifen

Unter Seifen sind schließlich Fettsäuresalze der Formel (X) zu verstehen,

**R**^{**13**}**CO-OX** (X)

in der R¹⁴CO für einen linearen oder verzweigten, gesättigten oder ungesättigten Acylrest mit 6 bis 22 und vorzugsweise 12 bis 18 Kohlenstoffatomen und wiederum X für Alkali- und/oder Erdalkali, Ammonium, Alkylammonium oder Alkanolammonium steht. Typische Beispiele sind die Natrium-, Kalium-, Magnesium-, Ammonium- und Triethanolammoniumsalze der Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Vorzugsweise werden Kokos- oder Palmkernfettsäure in Form ihrer Natrium- oder Kaliumsalze eingesetzt.

### Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. EP 0561825 B1, EP 0561999 B1 (Henkel)]. Die neutralisierten Stoffe können - falls gewünscht - einer Ultrafiltration unterworfen werden, um den Elektrolytgehalt auf ein gewünschtes Maß zu vermindern [DE 4204700 A1 (Henkel)]. Übersichten zur Chemie der Monoglyceridsulfate sind beispielsweise von A. K. Biswas et al. in J.Am.Oil.Chem.Soc. 37, 171 (1960) und F. U. Ahmed J.Am.Oil.Chem.Soc. 67, 8 (1990) erschienen. Die im Sinne der Erfindung einzusetzenden Monoglycerid(ether)sulfate folgen der Formel (VI), 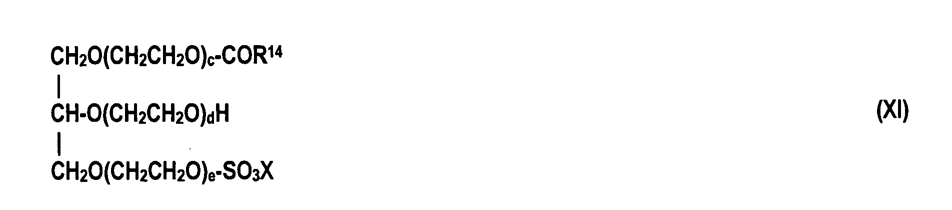 in der R¹⁴CO für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel (XI) eingesetzt, in der R¹⁴CO für einen linearen Acylrest mit 8 bis 18 Kohlenstoffatomen steht.

### Alkansulfonate

Alkansulfonate lassen sich in primäre und sekundäre Alkansulfonate einteilen. Darunter versteht man Verbindungen der Formel (XII),

**R**^{**15**}**-CH(SO**_{**3**}**H)-R**^{**16**} (XII)

wobei bei primären Alkansulfonaten R¹⁵ für Wasserstoff und R¹⁶ für einen Alkylrest mit nicht mehr als 50 Kohlenstoffen steht. Bevorzugt sind die sekundären Alkansulfonate.

Die erfindungsgemäßen Zubereitungen enthalten die obengenannten Tensidgranulate in einer Menge von mindestens etwa 1 Gew.-%, Im Rahmen einer bevorzugten Ausführungsform der vorliegenden Erfindung enthalten die erfindungsgemäßen Zubereitungen einen Anteil an Tensidgranulaten von etwa 2 bis etwa 30, insbesondere etwa 5 bis etwa 25 Gew.-%.

Der Anteil an anionischen Tensiden in den erfindungsgemäßen Zubereitungen beträgt etwa 1 bis etwa 60 Gew.-%, insbesondere etwa 5 bis etwa 50 oder etwa 10 bis etwa 40 Gew.-%.

Die erfindungsgemäßen Zubereitungen lassen sich erfindungsgemäß als Wasch- oder reinigungsmittel einsetzen. Sie sind dabei als Pulverwaschmittel, als granulatförmige Waschmittel oder als stückige Waschmittel, insbesondere als Waschmitteltabletten geeignet.

Dabei können die erfindungsgemäßen Zubereitungen neben den bereits oben genannten Inhaltsstorfen noch weitere typische Inhaltsstoffe sowie Hilfs- und Zusatzstoffe enthalten, wie sie nachfolgend aufgeführt werden.

Die Wasch- und Reinigungsmittel können neben den genannten noch weitere typische Inhaltsstoffe, wie beispielsweise Builder, Bleichmittel, Bleichaktivatoren, Waschkraftverstärker, Enzyme, Enzymstabilisatoren, Vergrauungsinhibitoren, optische Aufheller, Soil repeliants, Schauminhibitoren, anorganische Salze sowie Duft- und Farbstoffe enthalten.

Als fester Builder wird insbesondere feinkristalliner, synthetisches und gebundenes Wasser enthaltender Zeolith wie Zeolith NaA in Waschmittelqualität eingesetzt. Geeignet sind jedoch auch Zeolith NaX sowie Mischungen aus NaA und NaX. Der Zeolith kann als sprühgetrocknetes Pulver oder auch als ungetrocknete, von ihrer Herstellung noch feuchte, stabilisierte Suspension zum Einsatz kommen. Für den Fall, dass der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C12-Cis-Fettalkoholen mit 2 bis 5 Ethylenoxidgruppen oder ethoxylierte Isotridecanole. Geeignete Zeolithe weisen eine mittlere Teilchengröße von weniger als 10 pm (Volumenverteilung; Meßmethode: Coulter Counter) auf und enthalten vorzugsweise 18 bis 22, insbesondere 20 bis 22 Gew.-% an gebundenem Wasser. Geeignete Substitute bzw. Teilsubstitute für Zeolithe sind kristalline, schichtförmige Natriumsilicate der allgemeinen Formel NaMSixO2x+1-yH2O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilicate werden beispielsweise in der europäischen Patentanmeldung EP 0 164 514 A beschrieben. Bevorzugte kristalline Schichtsilicate sind solche, in denen M in der allgemeinen Formel für Natrium steht und x die Werte 2 oder 3 annimmt. Insbesondere sind sowohl β- als auch y-Natriumdisilicate Na2Si2O5-yH2O bevorzugt, wobei 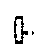 Natriumdisilicat beispielsweise nach dem Verfahren erhalten werden kann, das in der internationalen Patentanmeldung **WO 91/08171** beschrieben ist. Die erfindungsgemäßen Pulverwaschmittel enthalten als feste Builder vorzugsweise 10 bis 60 Gew.-% Zeolith und/oder kristalline Schichtsilicate, wobei Mischungen von Zeolith und kristallinen Schichtsilicaten in einem beliebigen Verhältnis besonders vorteilhaft sein können. Insbesondere ist es bevorzugt, dass die Mittel 20 bis 50 Gew.-% Zeolith und/oder kristalline Schichtsilicate enthalten. Besonders bevorzugte Mittel enthalten bis 40 Gew.-% Zeolith und insbesondere bis 35 Gew.-% Zeolith, jeweils bezogen auf wasserfreie Aktivsubstanz. Weitere geeignete Inhaltsstoffe der Mittel sind wasserlösliche amorphe Silicate; vorzugsweise werden sie in Kombination mit Zeolith und/oder kristallinen Schichtsilicaten eingesetzt.

Insbesondere bevorzugt sind dabei Mittel, welche vor allem Natriumsilicat mit einem molaren Verhältnis (Modul) Na20 : SiO2 von 1:1 bis 1:4,5, vorzugsweise von 1:2 bis 1:3,5, enthalten. Der Gehalt der Mittel an amorphen Natriumsilicaten beträgt dabei vorzugsweise bis 15 Gew.-% und vorzugsweise zwischen 2 und 8 Gew.-%. Auch Phosphate wie Tripolyphosphate, Pyrophosphate und Orthophosphate können in geringen Mengen in den Mitteln enthalten sein. Vorzugsweise beträgt der Gehalt der Phosphate in den Mitteln bis 15 Gew.-%, jedoch insbesondere 0 bis 10 Gew.-%. Außerdem können die Mittel auch zusätzlich Schichtsilicate natürlichen und synthetischen Ursprungs enthalten. Derartige Schichtsilicate sind beispielsweise aus den Patentanmeldungen **DE 23 34 899 B, EP 0 026 529 A** und **DE 35 26 405 A** bekannt. Ihre Verwendbarkeit ist nicht auf eine spezielle Zusammensetzung bzw. Strukturformel beschränkt. Bevorzugt sind hier jedoch Smectite, insbesondere Bentonite. Geeignete Schichtsilicate, die zur Gruppe der mit Wasser quellfähigen Smectite zählen, sind z.B. Montmorrilonit, Hectorit oder Saponit. Zusätzlich kann in das Kristallgitter der Schichtsilicate der vorstehenden Verbindungen geringe Mengen an Eisen eingebaut sein. Ferner können die Schichtsilicate aufgrund ihrer ionenaustauschenden Eigenschaften Wasserstoff-, Alkali-, Erdalkaliionen, insbesondere Na" und Ca2' enthalten. Die Hydratwassermenge liegt meist im Bereich von 8 bis 20 Gew.-% und ist vom Quellzustand bzw. von der Art der Bearbeitung abhängig. Geeignete Schichtsilicate sind beispielsweise aus **US 3,966,629, US 4,062,647, EP 0 026 529 A** und **EP 0 028 432 A** bekannt. Vorzugsweise werden Schichtsilicate verwendet, die aufgrund einer Alkalibehandlung weitgehend frei von Calciumionen und stark färbenden Eisenionen sind.

Brauchbare organische Gerüstsubstanzen sind beispielsweise die bevorzugt in Form ihrer Natriumsalze eingesetzten Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bemsteinsäure, Glutarsäure, Weinsäure, Zuckersäuren und Mischungen aus diesen. Geeignete polymere Polycarboxylate sind beispielsweise die Natriumsalze der Polyacrylsäure oder der Polymethacrylsäure, beispielsweise solche mit einer relativen Molekülmasse von 800 bis 150.000 (auf Säure bezogen). Geeignete copolymere Polycarboxylate sind insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5.000 bis 200.000, vorzugsweise 10.000 bis 120.000 und insbesondere 50.000 bis 100.000. Der Einsatz polymerer Polycarboxylate ist nicht zwingend erforderlich. Falls jedoch polymere Polycarboxylate eingesetzt werden, so sind Mittel bevorzugt, welche biologisch abbaubare Polymere, beispielsweise Terpolymere, die als Monomere Acrylsäure und Maleinsäure bzw. deren Salze sowie Vinylalkohol bzw. Vinylalkohol-Derivate oder die als Monomere Acrylsäure und 2-AIkylallylsulfonsäure bzw. deren Salze sowie Zuckerderivate enthalten. Insbesondere sind Terpolymere geeignet, die nach der Lehre der deutschen Patentanmeldungen **DE 42 21 381 A** und **DE 43 00 772 A** erhalten werden.

Weitere geeignete Buildersubstanzen sind Polyacetale, welche durch Umsetzung von Dialdehyden mit Polyolcarbonsäuren, weiche 5 bis 7 Kohlenstoffatome und mindestens 3 Hydroxylgruppen aufweisen, beispielsweise wie in der europäischen Patentanmeldung **EP 0 280 223 A** beschrieben, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Unter den als **Bleichmittel** dienenden, in Wasser Wasserstoffperoxid liefernden Verbindungen haben das Natriumperborat-Tetrahydrat und das Natriumperborat-Monohydrat eine besondere Bedeutung.

Weitere Bleichmittel sind beispielsweise Peroxycarbonat, Citratperhydrate sowie Salze der Persäuren, wie Perbenzoate, Peroxyphthalate oder Diperoxydodecandisäure. Sie werden üblicherweise in Mengen von 8 bis 25 Gew.-% eingesetzt. Bevorzugt ist der Einsatz von Natriumperborat-Monohydrat in Mengen von 10 bis 20 Gew.-% und insbesondere von 10 bis 15 Gew.-%. Durch seine Fähigkeit, unter Ausbildung des Tetrahydrats freies Wasser binden zu können, trägt es zur Erhöhung der Stabilität des Mittels bei.

Um beim Waschen bei Temperaturen von 60°C und darunter eine verbesserte Bleichwirkung zu erreichen, können **Bleichaktivatoren** in die Präparate eingearbeitet werden. Beispiele hierfür sind mit Wasserstoffperoxid organische Persäuren bildende N-Acyl- bzw. O-Acyl-Verbindungen, vorzugsweise N,N'-tetraacylierte Diamine, ferner Carbonsäureanhydride und Ester von Polyolen wie Glucosepentaacetat. Der Gehalt der bleichmittelhaltigen Mittel an Bleichaktivatoren liegt in dem üblichen Bereich, vorzugsweise zwischen 1 und 10 Gew.-% und insbesondere zwischen 3 und 8 Gew.-%. Besonders bevorzugte Bleichaktivatoren sind N,N,N',N'-Tetraacetylethylendiamin und 1,5-Diacetyl-2,4-dioxo-hexahydro-1,3,5-triazin.

Als **Enzyme** kommen solche aus der Klasse der Proteasen, Lipasen, Amylasen, Cellulasen bzw. deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Ihr Anteil kann etwa 0,2 bis etwa 2 Gew.-% betragen. Die Enzyme können an Trägerstoffen adsorbiert und/oder in Hüllsubstanzen eingebettet sein, um sie gegen vorzeitige Zersetzung zu schützen. Zusätzlich zu den mono- und polyfunktionellen Alkoholen und den Phosphonaten können die Mittel weitere Enzymstabilisatoren enthalten. Beispielsweise können 0,5 bis 1 Gew.-% Natriumformiat eingesetzt werden. Möglich ist auch der Einsatz von Proteasen, die mit löslichen Calciumsalzen und einem Calciumgehalt von vorzugsweise etwa 1,2-Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboraten wie den Salzen der Orthoborsäure Metaborsäure und der Pyroborsäure.

**Vergrauungsinhibitoren** haben die Aufgabe, den von der Faser abgelösten Schmutz in der Flotte suspendiert zu halten und so das Vergrauen zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose, Methylcellulose, Hydroxyalkylcellulose und Mischether, wie Methylhydroxyethylcellulose, Methylhydroxypropylcellulose, Methylcarboxymethylcellulose und deren Gemische sowie Polyvinylpyrrolidon, beispielsweise in Mengen von 0,1 bis 5 Gew.-%, bezogen auf die Mittel, Die Mittel können als optische Aufheller Derivate der Diaminostilbendisulfonsäure bzw. deren Alkalimetallsalze enthalten. Geeignet sind z.B. Salze der 4,4'-Bis(2-aniiino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfo-styryl-diphenyls, oder 4-(4-Chlorstyryl)-4'-(2-sulfostyryl)-diphenyls. Auch Gemische der vorgenannten Aufheller können verwendet werden. Einheitlich weiße Granulate werden erhalten, wenn die Mittel außer den üblichen Aufhellern in üblichen Mengen, beispielsweise zwischen 0,1 und 0,5 Gew.-%, vorzugsweise zwischen 0,1 und 0,3 Gew.-%, auch geringe Mengen, beispielsweise 10o bis 10-3 Gew.-%, vorzugsweise um 10-5 Gew.-%, eines blauen Farbstoffs enthalten. Ein besonders bevorzugter Farbstoff ist Tinolux® (Handelsprodukt der Ciba-Geigy).

Als schmutzabweisende Polymere ("soil repellants") kommen solche Stoffe in Frage, die vorzugsweise Ethylenterephthalat- und/oder Polyethylenglykolterephthalatgruppen enthalten, wobei das Molverhältnis Ethylenterephthalat zu Polyethylenglykolterephthalat im Bereich von 50: 50 bis 90: 10 liegen kann. Das Molekulargewicht der verknüpfenden Polyethylenglykoleinheiten liegt insbesondere im Bereich von 750 bis 5.000, d.h., der Ethoxylierungsgrad der polyethylenglykolgruppenhaltigen Polymere kann ca. 15 bis 100 betragen. Die Polymeren zeichnen sich durch ein durchschnittliches Molekulargewicht von etwa 5.000 bis 200.000 aus und können eine Block-, vorzugsweise aber eine Random-Struktur aufweisen. Bevorzugte Polymere sind solche mit Molverhältnissen Ethylenterephthalat/Polyethylenglykolterephthalat von etwa 65 : 35 bis etwa 90 : 10, vorzugsweise von etwa 70:30 bis 80:20. Weiterhin bevorzugt sind solche Polymeren, die verknüpfende Polyethylenglykoleinheiten mit einem Molekulargewicht von 750 bis 5.000, vorzugsweise von 1000 bis etwa 3000 und ein Molekulargewicht des Polymeren von etwa 10.000 bis etwa 50.000 aufweisen. Beispiele für handelsübliche Polymere sind die Produkte Milease® T (ICI) oder Repelotex® SRP 3 (Rhone-Poulenc).

### Entschäumer

Als Entschäumer können wachsartige Verbindungen eingesetzt werden. Als "wachsartig" werden solche Verbindungen verstanden, die einen Schmelzpunkt bei Atmosphärendruck über 25°C (Raumtemperatur), vorzugsweise über 50°C und insbesondere über 70°C aufweisen. Die wachsartigen Entschäumersubstanzen sind in Wasser praktisch nicht löslich, d. h. bei 20°C weisen sie in 100 g Wasser eine Löslichkeit unter 0,1 Gew.-% auf. Prinzipiell können alle aus dem Stand der Technik bekannten wachsartigen Entschäumersubstanzen enthalten sein. Geeignete wachsartige Verbindungen sind beispielsweise Bisamide, Fettalkohole, Fettsäuren, Carbonsäureester von ein- und mehrwertigen Alkoholen sowie Paraffinwachse oder Mischungen derselben. Alternativ können natürlich auch die für diesen Zweck bekannten Silikonverbindungen eingesetzt werden.

Geeignete Paraffinwachse stellen im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in **"The Analyst" 87 (1962), 420,** beschrieben, und/oder seinen Erstarrungspunkt. Darunter versteht man die Temperatur, bei der das Paraffin durch langsames Abkühlen aus dem flüssigen in den festen Zustand übergeht. Dabei sind bei Raumtemperatur vollständig flüssige Paraffine, das heißt solche mit einem Erstarrungspunkt unter 25°C, erfindungsgemäß nicht brauchbar. Zu den Weichwachsen, die einen Schmelzpunkt im Bereich von 35 bis 50°C aufweisen, zählen vorzugsweise der Gruppe der Petrolate und deren Hydrierprodukte. Sie setzen sich aus mikrokristallinen Paraffinen und bis zu 70 Gew.-% Öl zusammen, besitzen eine salbenartige bis plastisch feste Konsistenz und stellen bitumenfreie Rückstände aus der Erdölverarbeitung dar. Besonders bevorzugt sind Destillationsrückstände (Petrolatumstock) bestimmter paraffinbasischer und gemischtbasischer Rohöle, die zu Vaseline weiterverarbeitet werden. Vorzugsweise handelt es sich weiterhin um aus Destillationsrückständen paraffin- und gemischtbasischer Rohöle und Zylinderöldestillate mittels Lösungsmittel abgeschiedene bitumenfreie, ölartige bis feste Kohlenwasserstoffe. Sie sind von halbfester, zügiger, klebriger bis plastisch-fester Konsistenz und besitzen Schmelzpunkte zwischen 50 und 70 °C. Diese Petrolate stellen die wichtigste Ausgangsbasis für die Herstellung von Mikrowachsen dar. Weiterhin geeignet sind die aus hochviskosen, paraffinhaltigen Schmieröldestillaten bei der Entparaffinierung abgeschiedenen festen Kohlenwasserstoffen mit Schmelzpunkten zwischen 63 und 79°C. Bei diesen Petrolaten handelt es sich um Gemische aus mikrokristallinen Wachsen und hochschmelzenden n-Paraffinen. Eingesetzt werden können beispielsweise die aus EP 0309931 A1 bekannten Paraffinwachsgemische aus beispielsweise 26 Gew.-% bis 49 Gew.-% mikrokristallinem Paraffinwachs mit einem Erstarrungspunkt von 62°C bis 90°C, 20 Gew.-% bis 49 Gew.-% Hartparaffin mit einem Erstarrungspunkt von 42°C bis 56°C und 2 Gew.-60 % bis 25 Gew.-% Weichparaffin mit einem Erstarrungspunkt von 35°C bis 40°C. Vorzugsweise werden Paraffine bzw. Paraffingemische verwendet, die im Bereich von 30°C bis 90°C erstarren. Dabei ist zu beachten, dass auch bei Raumtemperatur fest erscheinende Paraffinwachsgemische unterschiedliche Anteile an flüssigem Paraffin enthalten können. Bei den erfindungsgemäß brauchbaren Paraffinwachsen liegt dieser Flüssiganteil so niedrig wie möglich und fehlt vorzugsweise ganz. So weisen besonders bevorzugte Paraffinwachsgemische bei 30°C einen Flüssiganteil von unter 10 Gew.-%, insbesondere von 2 Gew.-% bis 5 Gew.-%, bei 40°C einen Flüssiganteil von unter 30 Gew.-%, vorzugsweise von 5 Gew.-% bis 25 Gew.-% und insbesondere von 5 Gew.-% bis 15 Gew.-%, bei 60°C einen Flüssiganteil von 30 Gew.-% bis 60 Gew.-%, insbesondere von 40 Gew.-% bis 55 Gew.-%, bei 80°C einen Flüssiganteil von 80 Gew.-% bis 100 Gew.-%, und bei 90°C einen Flüssiganteil von 100 Gew.-% auf. Die Temperatur, bei der ein Flüssiganteil von 100 Gew.-% des Paraffinwachses erreicht wird, liegt bei besonders bevorzugten Paraffinwachsgemischen noch unter 85°C, insbesondere bei 75°C bis 82°C. Bei den Paraffinwachsen kann es sich um Petrolatum, mikrokristalline Wachse bzw. hydrierte oder partiell hydrierte Paraffinwachse handeln.

Geeignete Bisamide als Entschäumer sind solche, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin, 1,3Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bismyristoylethylendiamin, Bispalmitoylethylendiamin, Bisstearoylethylendiamin und deren Gemische sowie die entsprechenden Derivate des Hexamethylendiamins.

Geeignete Carbonsäureester als Entschäumer leiten sich von Carbonsäuren mit 12 bis 28 Kohlenstoffatomen ab. Insbesondere handelt es sich um Ester von Behensäure, Stearinsäure, Hydroxystearinsäure, Ölsäure, Palmitinsäure, Myristinsäure und/oder Laurinsäure. Der Alkoholteil des Carbonsäureesters enthält einen ein- oder mehrwertigen Alkohol mit 1 bis 28 Kohlenstoffatomen in der Kohlenwasserstoffkette. Beispiele von geeigneten Alkoholen sind Behenylalkohol, Arachidylalkohol, Kokosalkohol, 12-Hydroxystearylalkohol, Oleylalkohol und Laurylalkohol sowie Ethylenglykol, Glycerin, Polyvinylalkohol, Saccharose, Erythrit, Pentaerythrit, Sorbitan und/oder Sorbit. Bevorzugte Ester sind solche von Ethylenglykol, Glycerin und Sorbitan, wobei der Säureteil des Esters insbesondere aus Behensäure, Stearinsäure, Ölsäure, Palmitinsäure oder Myristinsäure ausgewählt wird. In Frage kommende Ester mehrwertiger Alkohole sind beispielsweise Xylitmonopalmitat, Pentarythritmonostearat, Glycerinmonostearat, Ethylenglykolmonostearat und Sorbitanmonostearat, Sorbitanpalmitat, Sorbitanmonolaurat, Sorbitandilaurat, Sorbitandistearat, Sorbitandibehenat, Sorbitandioleat sowie gemischte Talgalkylsorbitanmono- und -diester. Brauchbare Glycerinester sind die Mono-, Di- oder Triester von Glycerin und genannten Carbonsäuren, wobei die Mono- oder Dieester bevorzugt sind. Glycerinmonostearat, Glycerinmonooleat, Glycerinmonopalmitat, Glycerinmonobehenat und Glycerindistearat sind Beispiele hierfür. Beispiele für geeignete natürliche Ester als Entschäumer sind Bienenwachs und Carnaubawachs, das ein Gemisch von Carnaubasäurealkylestern, oft in Kombination mit geringen Anteilen freier Camaubasäure, weiteren langkettigen Säuren, hochmolekularen Alkoholen und Kohlenwasserstoffen, darstellt.

Geeignete Carbonsäuren als weitere Entschäumerverbindung sind insbesondere Behensäure, Stearinsäure, Ölsäure, Palmitinsäure, Myristinsäure und Laurinsäure sowie deren Gemische, wie sie aus natürlichen Fetten bzw. gegebenenfalls gehärteten Ölen, wie Talg oder hydriertem Palmöl, erhältlich sind. Bevorzugt sind gesättigte Fettsäuren mit 12 bis 22, insbesondere 18 bis 22 C-Atomen.

Geeignete Fettalkohole als weitere Entschäumerverbindung sind die hydrierten Produkte der beschriebenen Fettsäuren.

Weiterhin können zusätzlich Dialkylether als Entschäumer enthalten sein. Die Ether können asymmetrisch oder aber symmetrisch aufgebaut sein, d. h. zwei gleiche oder verschiedene Alkylketten, vorzugsweise mit 8 bis 18 Kohlenstoffatomen enthalten. Typische Beispiele sind Di-n-octylether, Di-ioctylether und Di-n-stearylether, insbesondere geeignet sind Dialkylether, die einen Schmelzpunkt über 25°C, insbesondere über 40°C aufweisen.

Weitere geeignete Entschäumerverbindungen sind Fettketone, die nach den einschlägigen Methoden der präparativen organischen Chemie erhalten werden können. Zu ihrer Herstellung geht man beispielsweise von Carbonsäuremagnesiumsalzen aus, die bei Temperaturen oberhalb von 300°C unter Abspaltung von Kohlendioxid und Wasser pyrolysiert werden, beispielsweise gemäß der deutschen Offenlegungsschrift **DE 25 53 900 OS.** Geeignete Fettketone sind solche, die durch Pyrolyse der Magnesiumsalze von Laurinsäure, Myristinsäure, Palmitinsäure, Palmitoleinsäure, Stearinsäure, Ölsäure, Elaidinsäure, Petroselinsäure, Arachinsäure, Gadoleinsäure, Behensäure oder Erucasäure hergestellt werden. Weitere geeignete Entschäumer sind Fettsäurepolyethylenglykolester, die vorzugsweise durch basisch homogen katalysierte Anlagerung von Ethylenoxid an Fettsäuren erhalten werden. Insbesondere erfolgt die Anlagerung von Ethylenoxid an die Fettsäuren in Gegenwart von Alkanolaminen als Katalysatoren. Der Einsatz von Alkanolaminen, speziell Triethanolamin, führt zu einer äußerst selektiven Ethoxylierung der Fettsäuren, insbesondere dann, wenn es darum geht, niedrig ethoxylierte Verbindungen herzustellen. Innerhalb der Gruppe der Fettsäurepolyethylenglykolester werden solche bevorzugt, die einen Schmelzpunkt über 25°C, insbesondere über 40°C aufweisen.

Innerhalb der Gruppe der wachsartigen Entschäumer werden besonders bevorzugt die beschriebenen Paraffinwachse alleine als wachsartige Entschäumer eingesetzt oder in Mischung mit einem der anderen wachsartigen Entschäumer, wobei der Anteil der Paraffinwachse in der Mischung vorzugsweise über 50 Gew.-% - bezogen auf wachsartige Entschäumermischung -ausmacht. Die Paraffinwachse können bei Bedarf auf Träger aufgebracht sein. Als Trägermaterial sind alle bekannten anorganischen und/oder organischen Trägermaterialien geeignet. Beispiele für typische anorganische Trägermaterialien sind Alkalicarbonate, Alumosilicate, wasserlösliche Schichtsilicate, Alkalisilicate, Alkalisulfate, beispielsweise Natriumsulfat, und Alkaliphosphate. Bei den Alkalisilicaten handelt es sich vorzugsweise um eine Verbindung mit einem Molverhältnis Alkalioxid zu SiO₂ von 1 : 1,5 bis 1 : 3,5. Die Verwendung derartiger Silicate resultiert in besonders guten Korneigenschaften, insbesondere hoher Abriebsstabilität und dennoch hoher Auflösungsgeschwindigkeit in Wasser. Zu den als Trägermaterial bezeichneten Alumosilicaten gehören insbesondere die Zeolithe, beispielsweise Zeolith NaA und NaX.

Zu den als wasserlöslichen Schichtsilicaten bezeichneten Verbindungen gehören beispielsweise amorphes oder kristallines Wasserglas. Weiterhin können Silicate Verwendung finden, welche unter der Bezeichnung Aerosil® oder Sipernat® im Handel sind.

Als organische Trägermaterialien kommen zum Beispiel filmbildende Polymere, beispielsweise Polyvinylalkohole, Polyvinylpyrrolidone, Poly(meth)acrylate, Polycarboxylate, Cellulosederivate und Stärke in Frage. Brauchbare Celluloseether sind insbesondere Alkalicarboxymethylcellulose, Methylcellulose, Ethylcellulose, Hydroxyethylcellulose und sogenannte Cellulosemischether, wie zum Beispiel Methylhydroxyethylcellulose und Methylhydroxypropylcellulose, sowie deren Mischungen. Besonders geeignete Mischungen sind aus Natrium-Carboxymethylcellulose und Methylcellulose zusammengesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Als Träger ist auch native Stärke geeignet, die aus Amylose und Amylopectin aufgebaut ist. Als native Stärke wird Stärke bezeichnet, wie sie als Extrakt aus natürlichen Quellen zugänglich ist, beispielsweise aus Reis, Kartoffeln, Mais und Weizen. Native Stärke ist ein handelsübliches Produkt und damit leicht zugänglich. Als Trägermaterialien können einzeln oder mehrere der vorstehend genannten Verbindungen eingesetzt werden, insbesondere ausgewählt aus der Gruppe der Alkalicarbonate, Alkalisulfate, Alkaliphosphate, Zeolithe, wasserlösliche Schichtsilicate, Alkalisilicate, Polycarboxylate, Celluloseether, Polyacrylat/Polymethacrylat und Stärke. Besonders geeignet sind Mischungen von Alkalicarbonaten, insbesondere Natriumcarbonat, Alkalisilicaten, insbesondere Natriumsilicat, Alkalisulfaten, insbesondere Natriumsulfat und Zeolithen.

Geeignete Silicone sind übliche Organopolysiloxane, die einen Gehalt an feinteiliger Kieselsäure, die wiederum auch silaniert sein kann, aufweisen können. Derartige Organopolysiloxane sind beispielsweise in der Europäischen Patentanmeldung **EP 0 496 510 A1** beschrieben. Besonders bevorzugt sind Polydiorganosiloxane und insbesondere Polydimethylsiloxane, die aus dem Stand der Technik bekannt sind. Geeignete Polydiorganosiloxane weisen eine nahezu lineare Kette auf und weisen einen Oligomerisierungsgrad von 40 bis 1500 auf. Beispiele für geeignete Substituenten sind Methyl, Ethyl, Propyl, Isobutyl, tert. Butyl und Phenyl. Weiterhin geeignet sind amino-, fettsäure-, alkohol-, polyether-, epoxy-, fluor-, glykosid- und/oder alkylmodifizierte Siliconverbindungen, die bei Raumtemperatur sowohl flüssig als auch harzförmig vorliegen können. Weiterhin geeignet sind Simethicone, bei denen es sich um Mischungen aus Dimethiconen mit einer durchschnittlichen Kettenlänge von 200 bis 300 Dimethylsiloxan-Einheiten und hydrierten Silicaten handelt. In der Regel enthalten die Silicone im allgemeinen und die Polydiorganosiloxane im besonderen feinteilige Kieselsäure, die auch silaniert sein kann. Insbesondere geeignet sind im Sinne der vorliegenden Erfindung kieselsäurehaltige Dimethylpolysiloxane. Vorteilhafterweise haben die Polydiorganosiloxane eine Viskosität nach Brookfield bei 25°C (Spindel 1, 25 Upm) im Bereich von 5000 mPas bis 30 000 mPas, insbesondere von 15 000 bis 25 000 mPas. Vorzugsweise werden die Silicone in Form ihrer wäßrigen Emulsionen eingesetzt.

In der Regel gibt man das Silicon zu vorgelegtem Wasser unter Rühren. Falls gewünscht kann man zur Erhöhung der Viskosität der wäßrigen Siliconemulsionen Verdickungsmittel, wie sie aus dem Stand der Technik bekannt sind, zugeben. Diese können anorganischer und/oder organischer Natur sein, besonders bevorzugt werden nichtionische Celluloseether wie Methylcellulose, Ethylcellulose und Mischether wie Methylhydoxyethylcellulose, Methylhydroxypropylcellulose, Methylhydroxybutylcellulose sowie anionische Carboxycellulose-Typen wie das Carboxymethylcellulose-Natriumsalz (Abkürzung CMC).

Die erfindungsgemäßen Zubereitungen können in untergeordneten Mengen, beispielsweise bis zu etwa 2 Gew.-%, kationische Tenside enthalten. Typische Beispiele für kationische Tenside sind insbesondere Tetraalkylammoniumverbindungen, beispielsweise Dimethyldistearylammoniumchlorid oder Hydroxyethyl Hydroxycetyl Dimmonium Chloride (Dehyquart E) oder aber Esterquats. Hierbei handelt es sich beispielsweise um quaternierte Fettsäuretriethanolaminestersalze der Formel (XIII), 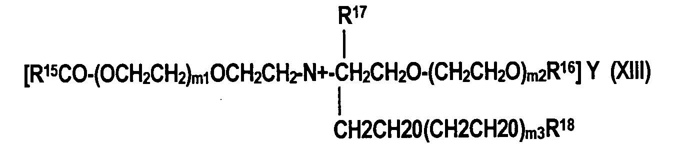 in der R ¹⁵CO für einen Acylrest mit 6 bis 22 Kohlenstoffatomen, R¹⁶ und R¹⁷ unabhängig voneinander für Wasserstoff oder R ¹⁵CO, R¹⁶ für einen Alkylrest mit 1 bis 4 Kohlenstoffatomen oder eine (CH₂CH₂O)ₘ₄H-Gruppe, m1, m2 und m3 in Summe für 0 oder Zahlen von 1 bis 12, m4 für Zahlen von 1 bis 12 und Y für Halogenid, Alkylsulfat oder Alkylphosphat steht. Typische Beispiele für Esterquats, die im Sinne der Erfindung Verwendung finden können, sind Produkte auf Basis von Capronsäure, Caprylsäure, Caprinsäure, Laurinsäure, Myristinsäure, Palmitinsäure, Isostearinsäure, Stearinsäure, Ölsäure, Elaidinsäure, Arachinsäure, Behensäure und Erucasäure sowie deren technische Mischungen, wie sie beispielsweise bei der Druckspaltung natürlicher Fette und Öle anfallen. Vorzugsweise werden technische C_{12/14}-Kokosfettsäuren und insbesondere teilgehärtete Palmfettsäuren sowie elaidinsäurereiche C_{16/18}-Fettsäureschnitte eingesetzt. Zur Herstellung der quatemierten Ester können die Fettsäuren und das Triethanolamin im molaren 5 Verhältnis von 1,1:1 bis 3:1 eingesetzt werden. Im Hinblick auf die anwendungstechnischen Eigenschaften der Esterquats hat sich ein Einsatzverhältnis von 1,2:1 bis 2,2:1, vorzugsweise 1,5:1 bis 1,9:1 als besonders vorteilhaft erwiesen. Die bevorzugten Esterquats stellen technische Mischungen von Mono-, Di- und Triestern mit einem durchschnittlichen Veresterungsgrad von 1,5 bis 1,9 dar und leiten sich von technischer C_{16/18} Talg- bzw. Palmfettsäure (lodzahl 0 bis 40) ab. Aus anwendungstechnischer Sicht haben sich quaternierte Fettsäuretriethanolaminestersalze der Formel (VIII) als besonders vorteilhaft erwiesen, in der R¹⁵CO für einen Acylrest mit 16 bis 18 Kohlenstoffatomen, R¹⁶ für R"CO, R¹⁷ für Wasserstoff, R¹⁸ für eine Methylgruppe, m1, m2 und m3 für 0 und Y für Methylsulfat steht.

Neben den quaternierten Fettsäuretriethanolaminestersalzen kommen als Esterquats ferner auch quaternierte Estersalze von Fettsäuren mit Diethanolalkylaminen der Formel (XIV) in Betracht, 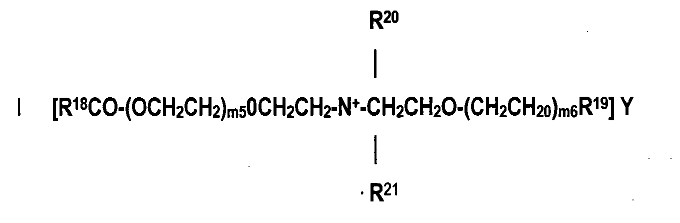 in der R¹⁸CO für einen Acylrest mit 6 bis 22 Kohlenstoffatomen, R¹⁹ für Wasserstoff oder R¹⁸CO, R²⁰ und R²¹ unabhängig voneinander für Alkylreste mit 1 bis 4 Kohlenstoffatomen, m5 und m6 in Summe für 0 oder Zahlen von 1 bis 12 und Y wieder für Halogenid, Alkylsulfat oder Alkylphosphat steht. Als weitere Gruppe geeigneter Esterquats sind schließlich die quaternierten Estersalze von Fettsäuren mit 1,2-Dihydroxypropyldialkylaminen der Formel (XV) zu nennen, 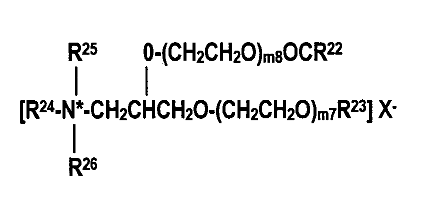 in der R ²²CO für einen Acylrest mit 6 bis 22 Kohlenstoffatomen, R²³ für Wasserstoff oder R²²CO, R24, R21 und R²⁶ unabhängig voneinander für Alkylreste mit 1 bis 4 Kohlenstoffatomen, m7 und m8 in Summe für 0 oder Zahlen von 1 bis 12 und X wieder für Halogenid, Alkylsulfat oder Alkylphosphat steht.

Schließlich kommen als Esterquats noch Stoffe in Frage, bei denen die Ester- durch eine Amidbindung ersetzt ist und
die vorzugsweise basierend auf Diethylentriamin der Formel (XVI) folgen, 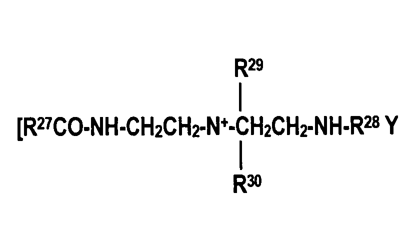 in der R ²⁷CO für einen Acylrest mit 6 bis 22 Kohlenstoffatomen, R²⁸ für Wasserstoff oder R ²⁷CO, R²⁹ und R³⁰ unabhängig voneinander für Alkylreste mit 1 bis 4 Kohlenstoffatomen und Y wieder für Halogenid, Alkylsulfat oder Alkylphosphat steht. Derartige Amidesterquats sind beispielsweise unter der Marke Incroquat® (Croda) im Markt erhältlich. Beispiele für geeignete amphotere bzw. zwitterionische Tenside sind Alkylbetaine, Alkylamidobetaine, Aminopropionate, Aminoglycinate, Imidazoliniumbetaine und Sulfobetaine. Beispiele für geeignete Alkylbetaine stellen die Carboxyalkylierungsprodukte von sekundären und insbesondere tertiären Aminen dar, die der Formel (XII) folgen, 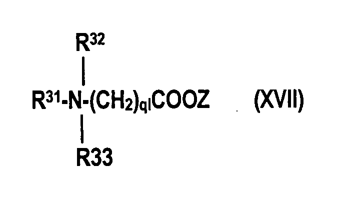 in der R³¹ für Alkyl- und/oder Alkenylreste mit 6 bis 22 Kohlenstoffatomen, R³² fur Wasserstoff oder Alkylreste mit 1 bis 4 Kohlenstoffatomen, R³³ für Alkylreste mit 1 bis 4 Kohlenstoffatomen, q1 für Zahlen von 1 bis 6 und Z für ein Alkali und/oder Erdalkalimetall oder Ammonium steht. Typische Beispiele sind die Carboxymethylierungsprodukte von Hexylmethylamin, Hexyldimethylamin, Octyldimethylamin, Decyldimethylamin, Dodecylmethylamin, Dodecyldimethylamin, Dodecylethylmethylamin, C12/14-Kokosalkyldimethylamin, Myristyldimethylamin, Cetyldimethylamin, Stearyldimethylamin, Stearylethylmethylamin, Oleyldimethylamin, C_{16/18}-Talgalkyldimethylamin sowie deren technische Gemische.

Weiterhin kommen auch Carboxyalkylierungsprodukte von Amidoaminen in Betracht, die der Formel (XIII) folgen, 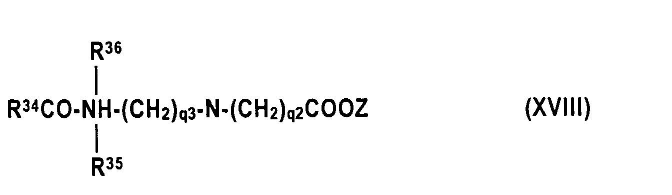 in der R ³⁴CO für einen aliphatischen Acylrest mit 6 bis 22 Kohlenstoffatomen und 0 oder 1 bis 3 Doppelbindungen, Ras für Wasserstoff oder Alkylreste mit 1 bis 4 Kohlenstoffatomen, R³⁶ für Alkylreste mit 1 bis 4 Kohlenstoffatomen, q2 für Zahlen von 1 bis 6, q3 für Zahlen von 1 bis 3 und Z wieder für ein Alkali- und/oder Erdalkalimetall oder Ammonium steht. Typische Beispiele sind Umsetzungsprodukte von Fettsäuren mit 6 bis 22 Kohlenstoffatomen, namentlich Capronsäure, Caprylsäure, Caprinsäure, Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Gemische, mit N,N-Dimethylaminoethylamin, N,N-Dimethylaminopropylamin, N,N-Diethylaminoethylamin und N,N-Diethylaminopropylamin, die mit Natriumchloracetat kondensiert werden. Bevorzugt ist der Einsatz eines Kondensationsproduktes von C_{8/18}-Kokosfettsäure-N,N-dimethylaminopropylamid mit Natriumchloracetat.

Weiterhin kommen auch Imidazoliniumbetaine in Betracht. Auch bei diesen Substanzen handelt es sich um bekannte Stoffe, die beispielsweise durch cyclisierende Kondensation von 1 oder 2 Mol Fettsäure mit mehrwertigen Aminen wie beispielsweise Aminoethylethanolamin (AEEA) oder Diethylentriamin erhalten werden können. Die entsprechenden Carboxyalkylierungsprodukte stellen Gemische unterschiedlicher offenkettiger Betaine dar. Typische Beispiele sind Kondensationsprodukte der oben genannten Fettsäuren mit AEEA, vorzugsweise Imidazoline auf Basis von Laurinsäure oder wiederum C12/14-Kokosfettsäure, die anschließend mit Natriumchloracetat betainisiert werden.

Der Gesamtanteil der Hilfs- und Zusatzstoffe kann 1 bis 70, vorzugsweise 5 bis 60 Gew.-% - bezogen auf die gesamte Zubereitung betragen.

### Duftstoffe

Als Parfümöle bzw. Duftstoffe können einzelne Riechstoffverbindungen, z. B. die synthetischen Produkte vom Typ der Ester, Ether, Aldehyde, Ketone, Alkohole und Kohlenwasserstoffe verwendet werden. Riechstoffverbindungen vom Typ der Ester sind z. B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethem zählen beispielsweise Benzylethylether, zu den Aldehyden z. B. die linearen Alkanale mit 8-18 C-Atomen, Citral, Citronellal, Citronellyloxyacetaldehyd, Cyclamenaldehyd, Hydroxycitronellal, Lilial und Bourgeonal, zu den Ketonen z. B. die Jonone, 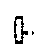 -Isomethylionon und Methylcedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z. B. Pine, Citrus-, Jasmin-, Patchouly-, Rosen- oder Ylang-Ylang-ÖI. Ebenfalls geeignet sind Muskateller, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Die Duftstoffe können direkt in die erfindungsgemäßen Mittel eingearbeitet werden, es kann aber auch vorteilhaft sein, die Duftstoffe auf Träger aufzubringen, welche die Haftung des Parfüms auf der Wäsche verstärken und durch eine langsamere Duftfreisetzung für langanhaltenden Duft der Textilien sorgen. Als solche Trägermaterialien haben sich beispielsweise Cyclodextrine bewährt, wobei die Cyclodextrin-Parfüm-Komplexe zusätzlich noch mit weiteren Hilfsstoffen beschichtet werden können.

### Stellmittel

Falls gewünscht können die Endzubereitungen noch anorganische Salze als Füll- bzw. Stellmittel enthalten, wie beispielsweise Natriumsulfat, welches vorzugsweise in Mengen von 0 bis 10, insbesondere 1 bis 5 Gew.-% - bezogen auf Mittel - enthalten ist.

Im Rahmen einer bevorzugten Ausführungsform der vorliegenden Erfindung stellen die erfindungsgemäßen Zubereitungen Waschmitteltabletten dar.

### Herstellung von Waschmitteltabletten

Die Herstellung der Waschmitteltabletten unter Einsatz der nichtionischen Tensidgranulate und der beschriebenen Hilfs- und Zusatzstoffe, z.B. Builder, kann in an sich bekannter Weise, beispielsweise durch Tablettierung erfolgen. Die erhaltenen Tabletten können entweder direkt als Waschmittel eingesetzt oder zuvor nach üblichen Methoden nachbehandelt und/oder aufbereitet werden. Zu den üblichen Nachbehandlungen zählen beispielsweise Abpuderungen mit feinteiligen Inhaltsstoffen von Wasch- oder Reinigungsmitteln, wodurch das Schüttgewicht im allgemeinen weiter erhöht wird. Eine bevorzugte Nachbehandlung stellt jedoch auch die Verfahrensweise gemäß den deutschen Patentanmeldungen **DE 195 24 287 A1** und **DE 195 47 457 A1** dar, wobei staubförmige oder zumindest feinteilige Inhaltsstoffe (die sogenannten Feinanteile) an die erfindungsgemäß hergestellten teilchenförmigen Verfahrensendprodukte, welche als Keim dienen, angeklebt werden und somit Mittel entstehen, welche diese sogenannten Feinanteile als Außenhülle aufweisen.

Vorteilhafterweise geschieht dies wiederum durch eine Schmelzagglomeration. Zur Schmelzagglomerierung der Feinanteile an wird ausdrücklich auf die Offenbarung in den deutschen Patentanmeldungen **DE 195 24 287 A1** und **DE 195 47 457 A1** verwiesen. In der bevorzugten Ausführungsform der Erfindung liegen die festen Waschmittel als Tabletten vor, wobei diese insbesondere aus lagerund transporttechnischen Gründen vorzugsweise abgerundete Ecken und Kanten aufweisen. Die Grundfläche dieser Tabletten kann beispielsweise kreisförmig oder rechteckig sein. Mehrschichtentabletten, insbesondere Tabletten mit 2 oder 3 Schichten, welche auch farblich verschieden sein können, sind vor allem bevorzugt. Die Tabletten können dabei auch gepresste und ungepresste Anteile enthalten.

Die Erfindung wird nachfolgend durch Beispiele näher erläutert

### Herstellung von Niotensidgranulaten:

Ein Gemisch von 90 % Dehydol ® LS 30 + 10 % PEG 12000 wurde auf einer Rieter Mini Droppo Line mit einem Düsendurchmesser von 300 µm, einem Druck von 2,8 bar bei einer Frequenz von 300 Hz, einer Temperatur der Eingangsluft von 4 °C, eine Schmelzentemperatur von 51 °C und einer Düsentemperatur von 67 °C vertropft. Dabei entstanden nahezu völlig sphärische Kügelchen mit einem durchschnittlichen Teilchendurchmesser von etwa 700 µm.

### Herstellung einer Waschmitteltablette:

Die oben erhaltenen Niotensidgranulate wurden mit Soda, anionischem Tensid, Builder und weiteren üblichen Inhaltsstoffen vermischt.

Zum Vergleich wurde eine identische Rezeptur hergestellt, statt des erfindungsgemäßen Niotensidgranulats wurde jedoch eine identischen Menge eines flüssigen Niotensids eingesetzt.
Während zur Herstellung von Tabletten aus einem erfindungsgemäßen Gemisch eine Stempelpresskraft der Tablettiermaschine von 5,3 kN benötigt wurde, erforderte das nicht erfindungsgemäße Gemisch eine Stempelpresskraft von 79 kN.

Im Rahmen eines weiteren Vergleichs wurde eine zu den oben genannten Rezepturen identische Rezeptur ohne Niotensid verpresst (die fehlende Menge an Niotensid wurde durch Natriumsulfat ersetzt), wobei die benötigte Presskraft 44 kN betrug.

Die Bruchhärte der erfindungsgemäßen Tabletten war höher als die Bruchhärte der Vergleichsbeispiele. Die Vergleichsrezeptur ohne Niotensid wies zwar die schnellste Zerfallszeit auf, die erfindungsgemäßen Tabletten wiesen jedoch eine kürzere Zerfallszeit auf als die nicht erfindungsgemäßen Tabletten mit flüssigem Niotensid.

## Patentansprüche

1. Wasch- und reinigungsaktive Zubereitung, mindestens enthaltend ein Granulat eines bei Raumtemperatur festen nichtionischen Tensids und mindestens ein anionisches Tensid.

2. Zubereitung nach Anspruch 1, **dadurch gekennzeichnet, dass** sie mindestens 2.Gew.-% des bei Raumtemperatur festen nichtionischen Tensids enthält.

3. Zubereitung nach Anspruch 1 oder 2, **dadurch gekennzeichnet, dass** sie mindestens 2 Gew.-% eines anionischen Tensids enthält.

4. Zubereitung nach einem der Ansprüche 1 bis 3, **dadurch gekennzeichnet, dass** die Granulate eine mittlere Teilchengröße von 100 bis 1200 µm aufweisen.

5. Zubereitung nach einem der Ansprüche 1 bis 4, **dadurch gekennzeichnet, dass** das Granulat eines bei Raumtemperatur festen nichtionischen Tensids mindestens einen alkoxylierten Fettalkohol enthält.

6. Zubereitung nach einem der Ansprüche 1 bis 5, **dadurch gekennzeichnet, dass** das Granulat eine Erweichungs- oder Schmelzpunkt von mindestens 40 °C aufweist.

7. Zubereitung nach einem der Ansprüche 1 bis 6, **dadurch gekennzeichnet, dass** sie in Granulat- oder Tablettenform vorliegt.

8. Verfahren zur Herstellung von Granulaten fester nichtionischer Tenside, bei dem eine Schmelze, mindestens enthaltend ein bei Raumtemperatur festes nichtionisches Tensid über eine mit mindestens einem Loch versehene, in Richtung der Plattennormalen vibrierende Platte so ausgetragen wird, dass sich Tropfen einer Größe von 100 bis 1200 µm bilden.

9. Verfahren nach Anspruch 8, **dadurch gekennzeichnet, dass** die Tropfen vor dem Auftreffen auf eine Auffangvorrichtung gekühlt werden.
